# EUROPEAN PATENT SPECIFICATION

(11) **EP 2 629 962 B1**
(45) Date of publication and mention of the grant of the patent: **12.06.2019**
(21) Application number: 10768055.5
(22) Date of filing: 18.10.2010
(51) Int. Cl.: B29C 70/02, B29C 70/44, C08J 5/00, B82Y 30/00, B29C 70/46, B29C 45/16, B29K 105/16, C08J 5/10, C08J 5/24, D03D 1/00, D03D 15/00

(54) **METHOD OF FORMING A COMPOSITE MATERIAL WITH ADDED NANOPARTICLES**
VERFAHREN ZUR HERSTELLUNG EINES VERBUNDWERKSTOFFES MIT HINZUGEFÜGTEN NANOPARTIKELN
PROCÉDÉ DE FORMATION D'UNE MATIÈRE COMPOSITE CONTENANT DES NANOPARTICULES AJOUTÉES

(43) Date of publication of application: 28.08.2013
(73) Proprietor: Short Brothers Plc, Belfast Antrim BT3 9DZ (GB)
(72) Inventor: BALLOCCHI, Paolo, Newcastle Down BT33 0RH (GB); WILSON, Robert Samuel, Belfast Antrim BT4 3DY (GB)
(74) Representative: HGF Limited
(86) International application number: PCT/GB2010/051755
(87) International publication number: WO 2012/052699

(56) References cited:
- DE-A1-102008 038 294
- US-A1- 2008 183 208
- US-A1- 2010 136 316

## Description

### FIELD OF INVENTION

The present invention relates to forming a nanocomposite material that includes nanoparticles and which has an improved dispersion of the nanoparticles throughout the material. The present disclosure also relates to a carrier material that includes nanoparticles for forming a nanocomposite material.

### BACKGROUND OF THE INVENTION

Composite materials comprise a reinforcement material, such as glass or carbon fibres, embedded within a matrix material, such as a thermosetting polymer. The materials are often formed as a laminate comprising a number of plies. While the composite material can be tailored somewhat to meet requirements (such as through the choice of reinforcement and matrix materials or the fibre direction), there is an ongoing desire to improve the properties of the material.

For instance, it is known that the addition of a thermoplastic polymer to the thermoset resin matrix of a composite material can provide an increase in toughness. The thermoplastic material can be included as a powder, film or fibre; in this last case, either by commingling with the structural fibres prior to fabric manufacture, or by inserting them in the form of veils in between the layers of structural fibres. In either case, the toughened laminates have been shown to exhibit superior damage tolerance to the non-toughened laminates ("Toughening of thermosetting composites with thermoplastic fibres", Materials Science and Engineering, Volume 412, Issues 1-2, 5 December 2005). But thermoplastic veil can create several issues, among which (1) the potential threat to a complete infusion due to the increased viscosity of the resin with the dissolved thermoplastic in it, and particularly (2) the decreased electrical and thermal conductivity, affecting all electrical related functions, for example if used in the manufacturing of aerospace structures (e.g. electrical bonding, lighting strike protection).

Another way to offer substantial improvements in a range of properties compared to traditional composite materials is including nanoparticles within the matrix so as to create nanocomposite materials. These materials show strongly enhanced electrical and thermal properties, basically increasing the laminates conductivity and modifying other electrical parameters. This result is achieved without compromising, and even enhancing, the mechanical properties; e.g. these materials can exhibit enhanced properties of toughness, stiffness and strength.

This is primarily due to nanoparticles having an exceptionally high surface to volume ratio of the reinforcing phase and/or an exceptionally high aspect ratio. Typically, the nanoparticles, such as carbon nanotubes or Graphene for example, are dispersed into the matrix during processing. However, this can lead to a number of problems.

Nanoparticles exhibit strong surface interactions that can cause the particles to adhere together. This reduces the transfer of the nanoproperties to the macroscale, which requires the particles to be separate and homogeneously dispersed throughout the matrix, and therefore the entire composite material. Dispersion is a dynamic process and it has been found that many parameters, such as matrix viscosity, nanoparticles loading and temperature changes, all need to be optimized to achieve good dispersion stability. However, the conventional approach of introducing the nanoparticles into the resin while the resin is being heated can result in changes to the interactive factors within the material, causing the dispersion to collapse. The particles will then reagglomerate inside the resin, and the composite material will not exhibit the desired properties.

In addition, adding nanoparticles to the matrix significantly increases the viscosity of the matrix, and considerably more so than when conventional fillers are used. Around 0.75% of nanofiller will have the same impact on viscosity as 5% of conventional filler. This viscosity increase can limit the use of these materials in processes such as infusion or resin transfer moulding (RTM). Even prior to any shaping or curing process, it is necessary to mix the resin with other components and the complexity of this step is greatly increased by higher viscosities.

Furthermore, during a resin injection forming process, a filtering effect can be observed when the resin is injected to impregnate the reinforcing fibres (especially when heavy fabrics are involved), leading to an uneven nanoparticles distribution in the final laminate.

An opposite effect called wash-out can be seen in infusion processes (such as RTM and vacuum assisted resin transfer moulding VARTM) when nanoparticles are added to the fabric or to the preformed fabric (reinforcements), in different ways. The nanoparticles can be added in a powder binder form or in a conventional thermoplastic veil. This creates the issue of releasing the nanoparticles during the resin infusion, hence (1) the flowing resin tends to wash out the nanoparticles (with the effect again to impair homogeneous dispersion) and (2) the early released nanoparticles, mixed with the resin, will substantially increase resin viscosity (as when they are incorporated in the resin bulk), thereby compromising the infusion process.

Another way of adding nanoparticles to the preform is to add or grow them on the fabric itself (see, for example, the technique called "fuzzy fibres"); in this case the issue is the stability of the CNT link to the fabric (if unstable, it will take to the same issues reported before), plus the cost and complexity of the deposition/grow process and finally Health and Safety issue, due to the potential of these nanoparticles to become volatile.

Document DE 10 2008 038 294 A1 describes a fibre composite component that incorporates inorganic particles to improve properties of the component.

### SUMMARY OF THE INVENTION

According to the present invention there is provided a method of forming a nanocomposite material that includes nanoparticles, according to claim 1. The method comprises: :
disposing in a forming apparatus:
   - a fibre material;
   - a carrier material comprising nanoparticles dispersed therein, the carrier material having a releasing trigger to release the nanoparticles, the releasing trigger being a releasing temperature and a releasing pressure;
   - a resin having an infusion temperature;
increasing the temperature within the forming apparatus to a temperature at least equal to the infusion temperature of the resin to allow the resin to impregnate the fibre material without triggering the releasing trigger of the carrier material; and
triggering the releasing trigger of the carrier material in the forming apparatus by increasing the temperature and the pressure within the forming apparatus to cause dispersion of the nanoparticles.

The method may further comprise waiting for the fibre material to be fully infused by the resin before triggering the releasing trigger of the carrier material.

The resin may be a thermosetting polymer. The carrier material may be a thermoplastic material. The nanoparticles may comprise carbon nanotubes or Graphene. The nanoparticles may be dispersed within the carrier material while the carrier material is in a loose form.

The method may include forming a thread from the mix of carrier material and dispersed nanoparticles. The formed thread may be woven to form a veil.

The fibre material may be provided as a planar material and the veil may be located at an outer surface of the planar fibre material. A plurality of planar fibre materials may be provided in a laminate arrangement and the veil may be located between two adjacent layers of the planar fibre material.

The mix of carrier material and dispersed nanoparticles may be only provided at one or more local regions of the composite structure to be formed. The mix may be only provided at local regions of the composite structure which in use benefit from at least one specific electrical, thermal and mechanical property given by the nanoparticles.

At least a portion of the formed thread may be interwoven with the fibre material. At least a portion of the formed thread may be used as the stitching thread for a non-crimp fabric.

The forming apparatus may comprise a mould apparatus. The forming apparatus may comprise an autoclave.

The releasing trigger of the carrier material may be a melting temperature of the carrier material. The method may include heating the resin to a first temperature which is higher than or equal to the infusion temperature but lower than the melting temperature of the carrier material. The first temperature may be between 100 and 140 °C. The first temperature may be around 120 °C.

The method may include subsequently heating the resin to a second temperature which is higher than the melting temperature of the carrier material so as to disperse the nanoparticles within the resin. The second temperature may be between 160 and 200 °C. The second temperature may be around 180 °C.

The method may include increasing at least one of the temperature and pressure to melt the resin and then maintaining the at least one increased value until resin wet out has substantially completed before increasing temperature and pressure to trigger the release of the nanoparticles of the carrier material.

The method may include increasing at least one of the temperature and pressure to melt the resin and then maintaining the at least one increased value until resin homogenisation has substantially completed before increasing temperature and pressure to trigger the release of the nanoparticles of the carrier material.

The method includes increasing temperature and pressure to cause rapid melting of the carrier material. The method may include using a temperature which is significantly greater than the melting temperature of the carrier material. The method may include increasing the pressure to accelerate melting of the carrier material. The method may include increasing the pressure to between 0,55 and 0,69 MPa (80 and 100 psi). The method may include increasing the pressure to around 0,62 MPa (90 psi).

The method may include causing rapid melting of the carrier material substantially before curing of the resin.

The method may include increasing at least one of the temperature and pressure to melt the carrier material at a time when the viscosity of the resin is substantially at its lowest value.

The method may include using a resin infusion process in which the resin is infused or injected after the fibre material and carrier material have been placed in the forming apparatus.

The method of forming the nanocomposite material may comprise nanoparticles non completely incorporated in the carrier, but simply connected to it using the potential of some fabric material to attract or incorporate functionalized nanoparticles; again, following the principles of this invention, the created link will remain stable for all the infusion period, to then weaken and release the nanoparticles only when resin flow is substantially completed.

According to another aspect of the present disclosure there is provided a carrier material for use in forming a nanocomposite material that includes nanoparticles, the nanocomposite material comprising a fibre material and a resin having an infusion temperature, the carrier material comprising:
a plurality of nanoparticles dispersed therein;
a releasing trigger to release the nanoparticles, the releasing trigger being at least one of a releasing temperature and a releasing pressure,
wherein the releasing trigger is adapted such that increasing the temperature during forming of the nanocomposite material to the infusion temperature of the resin causes the resin to impregnate the fibre material without triggering the releasing trigger of the carrier material,
and wherein subsequent increasing at least one of the temperature and the pressure during forming to the releasing trigger of the carrier material causes dispersion of the nanoparticles.

The carrier material may be a thermoplastic material. The nanoparticles may comprise carbon nanotubes or Graphene. The nanoparticles may be dispersed within the carrier material while the carrier material is in a loose form.

The carrier material may comprise a thread formed from the mix of carrier material and dispersed nanoparticles. The carrier material may comprise a veil woven from the formed thread.

The fibre material may be provided as a planar material and the veil may be located at an outer surface of the planar fibre material. A plurality of planar fibre materials may be provided in a laminate arrangement and the veil may be located between two adjacent layers of the planar fibre material.

At least a portion of the formed thread may be interwoven with the fibre material. At least a portion of the formed thread may be used as the stitching thread for a non-crimp fabric.

### DESCRIPTION OF THE DRAWINGS

Embodiments of the present invention will now be described, by way of example only, with reference to the accompanying drawings in which:
Figure 1 is a diagrammatic view of the carrier material and nanoparticles in their raw state;
Figure 2 is a diagrammatic view of how the carrier material and nanoparticles are processed; and
Figure 3 is a graph showing an example of temperature, pressure and thermoset resin viscosity data over time during the forming process.
Figure 4 is a graph showing a theoretical conceptual example of temperature and pressure over time during the forming process.
Figure 5 is a diagrammatic view of how the carrier melts and releases particles during the process.
Figure 6 is a schematic view showing a forming apparatus in which a fibre material, a carrier material containing nanoparticles and resin are disposed; and
Figure 7 is schematic view showing steps of a method of forming a composite material in accordance with an embodiment of the invention.

### DETAILED DESCRIPTION

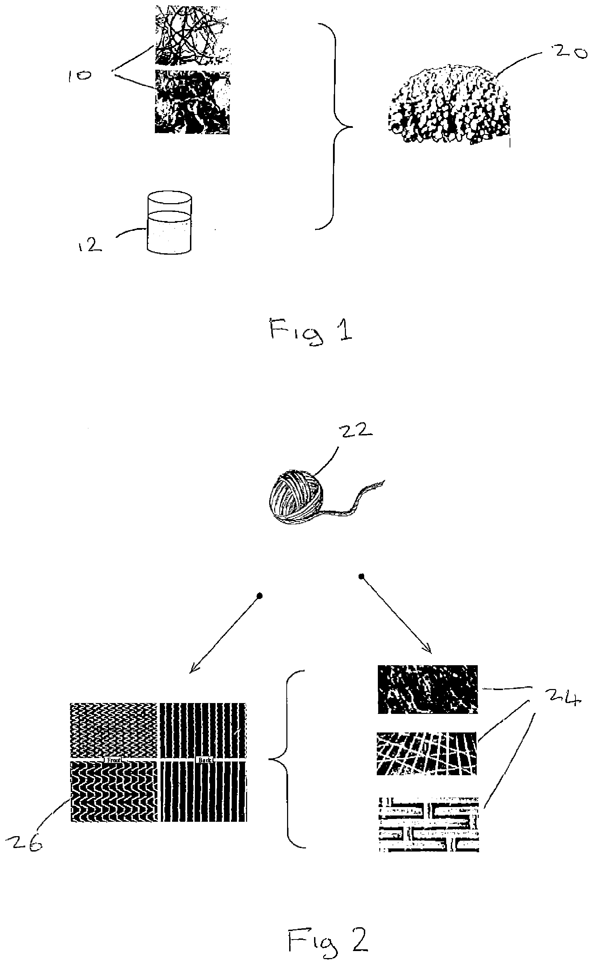

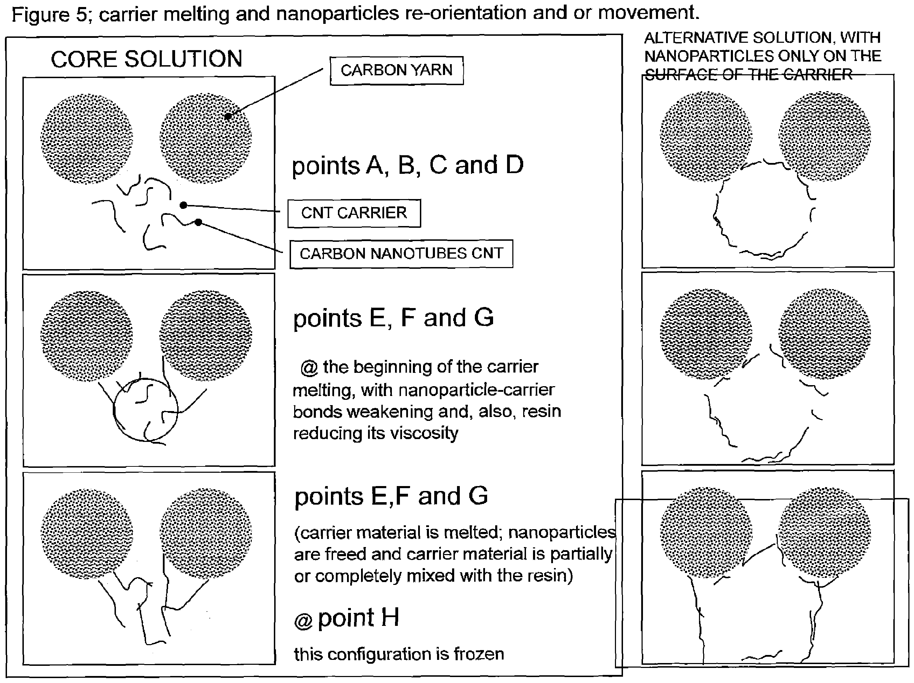

Figure 1 shows the method step of dispersing nanoparticles 10 within a carrier material 12 to form a mix 20. The carrier material 12 can be a thermoplastic material such as CoPolyamide CoPa 140, TPE-E thermoplastic polyester elastomers, Surlin lonomeric Polymers, Polyoxymethylene (POM) or others which have a melting temperature greater than 120° C. The nanoparticles 10 are mixed into the carrier material 12 while the carrier material 12 is in a loose particulate form. As shown in Figure 5, the nanoparticles 10 can be arranged to be dissolved within the carrier material 12.Alternatively the nanoparticles 10 can adhere to an outer surface of particles of the carrier material 12, using the potential of some fabric material to attract or incorporate functionalized nanoparticles. The mix 20 is subsequently spun into a thread 22 (shown in Figure 2).

A nanoparticle 10 such as a multi-walled carbon nanotube (MW CNT) is used which has the minimum level of electrical percolation threshold (around 1 to 2% in weight in the final component). Therefore, only a small amount is required. This has the minimum impact on the spinning of the mix 20 of carrier material and nanoparticles, allowing small diameter threads to be produced.

As shown in Figure 2, the formed thread 22 can either be woven to form a veil 24 or it can be used as the stitching thread for a non-crimp fabric 26. The choice depends on the minimum diameter of the formed thread 22 that can be achieved. If a veil 24 is formed, the veil 24 can be a fleece, grid, or a fabric.

In an alternative embodiment, the formed thread 22 can be interwoven with the fibre material.

In an alternative embodiment, the carrier can be a powder of a thermoplastic material comprising nanoparticles.

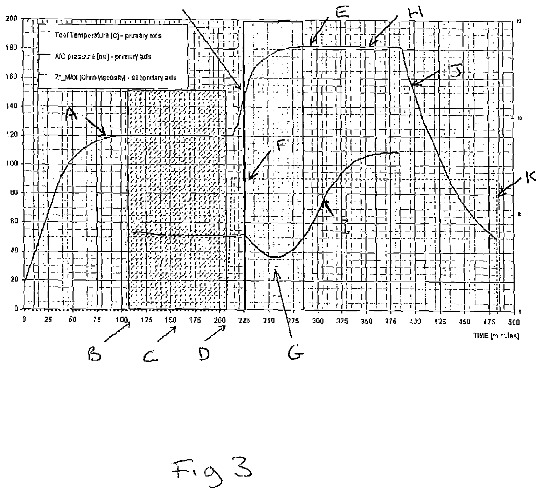

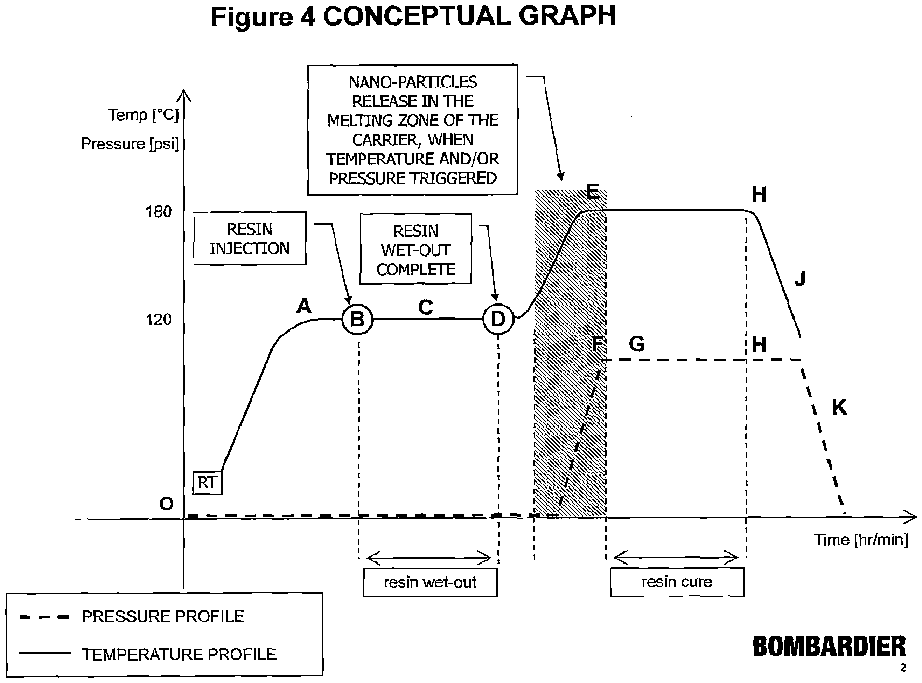

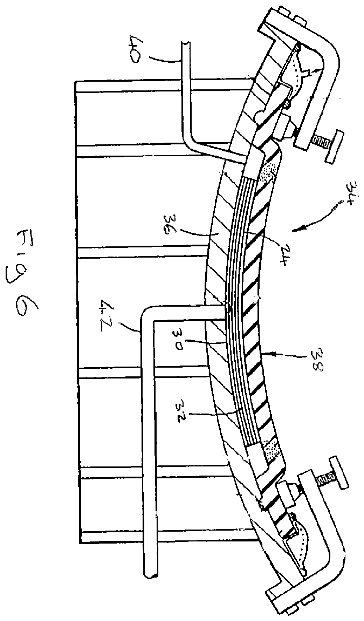

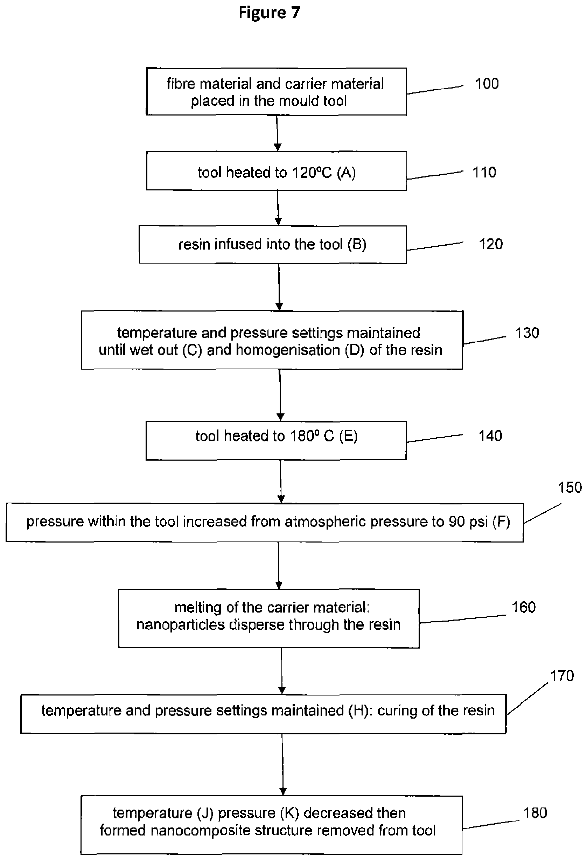

The method used for forming the nanocomposite material is a resin infusion process in which the resin is infused or injected after the fibre material and carrier material have been placed in the forming apparatus. Some examples of this process are RTM, VARTM, liquid resin infusion (LRI), Resin Transfer Infusion (RTI) and resin infusion with flexible tooling (RIFT). Figure 6 shows an RTI process. Figure 7 shows the steps of the method used with points A to K of the process shown on the graphs of Figures 3 and 4.

A preform 30, comprising layers of carbon fibre material 32 having a veil 24 interposing each layer, is located in a mould tool 34 within an autoclave at step 100. The tool 34 comprises a hard tool base 36 and a bagging blanket 38. The preform 30 is shaped within the mould 34 so that it corresponds to the desired final shape of the structure. The veils 24 can be provided at all regions of the preform 30. Alternatively, the veil 24 may be only provided at local regions of the composite as per electrical, thermal or structural requirements. This allows the formation of a structure which has localised enhancement of a property (such as stiffness, strength, damage tolerance, electrical conductivity, thermal conductivity or Lighting Strike Protection) at critical regions of the structure.

The tool 34 is then heated (A) to a first temperature of 120° C at step 110. A thermosetting polymer resin is then infused (B) into the tool 34 via a resin supply line 40 at step 120. This first temperature is the infusion temperature of the resin (where this particular thermoset resin has the required low values of viscosity) and so the resin begins to impregnate the fibre material 32. However, it is lower than the melting temperature of the carrier material. The temperature and pressure settings are then maintained for a period of time at step 130. During this period, a constant and low pressure is maintained within the tool 34. The resin continues to flow until complete wet out (C) and homogenisation (D) of the resin has occurred.

The tool 34 is then heated (E) to a second temperature of around 180° C at step 140 which is higher than the melting temperature of the carrier material (which in one example is around 150° C). The carrier material therefore melts rapidly and is quickly dissolved within the resin. In this particular example of an RTI process, the pressure within the tool is increased (F) from atmospheric pressure to 0,62 MPa (90 psi) using a pressure supply line 42 at step 150.

Rapid melting of the carrier material is advantageous as it minimises the effect of adding the carrier material and nanoparticles to the resin, such as the increase in viscosity. Also advantageous, at this stage (just prior to the onset of curing), the resin is at its lowest viscosity (G) as is common in any composite forming process. Therefore, the nanoparticles readily disperse through the resin (step 160) when released at this stage. Also, there is less resistance to the nanoparticles connecting to the fibres of the fibre material 32 under the action of Van der Vaals forces, allowing the build-up of the electrical-structural architecture that enhances the properties of the composite in the desired area.

The temperature and pressure settings are then maintained (H) for a further period of time at step 170. The high temperature causes curing of the resin and the viscosity of the resin rapidly increases (I). However, by this time, the nanoparticles are dispersed and evenly distributed within the resin. Curing of the resin fixes the position of the nanoparticles within the resin.

At the end of cure, the tool temperature (J) and then pressure (K) are then decreased. Eventually, the formed nanocomposite structure may be removed from the tool 34 (step 180).

It is important to note that substantial dissolution or melting of the carrier material 12 does not happen at the preforming temperature, or at the resin infusion temperature. Rather, rapid melting occurs just prior to (but is completed before) the onset of curing of the resin.

The present invention offers many advantages. The process is relatively easy to implement in production and readily controllable. The veil 24 can be applied to the layers of fibre material during the preforming phase, and only in the regions where needed. This can lead to a material with superior performance but also with a decrease in weight.

The method of the invention improves dispersion of the nanoparticles 10 within the resin and the wash out and filtering effects are significantly reduced. Also, the amount of nanoparticles 10 used is minimised and controlled. The carrier material 12 does not melt at infusion temperatures and so does not create a barrier to the resin wet-out, rather the carrier material 12 can enhance resin flow.

Compared to a conventional Liquid Resin Infusion (LRI), the present invention suits particularly the RTI process (such as disclosed in WO 2008040970). This is because the process takes place in an autoclave and the pressure during curing is raised to around 0,62 MPa (90 psi), rather than the conventional 0,1 MPa (14 psi) under vacuum pressure of conventional LRI.

## Claims

1. A method of forming a nanocomposite material that includes nanoparticles (10), the method comprising:
disposing in a forming apparatus (34)
a fibre material (32),
a carrier material (12) comprising nanoparticles dispersed therein, the carrier material having a releasing trigger to trigger release of the nanoparticles, the releasing trigger being a releasing temperature and a releasing pressure, and
a resin having an infusion temperature;
increasing the temperature within the forming apparatus to a temperature at least equal to the infusion temperature of the resin to allow the resin to impregnate the fibre material without triggering the releasing trigger of the carrier material;
triggering the releasing trigger of the carrier material in the forming apparatus by increasing the temperature and the pressure within the forming apparatus to cause the dispersion of the nanoparticles into the resin; and
curing the resin with the nanoparticles dispersed therein.

2. The method as claimed in claim 1, wherein:
the nanoparticles comprise at least one of carbon nanotubes and graphene,
the resin comprises a thermosetting polymer, and
the carrier material comprises a thermoplastic material.

3. The method as claimed in claim 1 or 2, including forming a thread (22) from a mix of carrier material and dispersed nanoparticles.

4. The method as claimed in claim 3, wherein the formed thread is woven to form a veil (24).

5. The method as claimed in claim 4, wherein the fibre material is provided as a planar material and the veil is located at an outer surface of the planar fibre material.

6. The method as claimed in claim 4 or 5, wherein a plurality of planar fibre materials are provided in a laminate arrangement and the veil is located between two adjacent layers of the planar fibre material.

7. The method as claimed in any preceding claim, wherein a mix of the carrier material and dispersed nanoparticles is only provided at one or more local regions of the composite structure to be formed.

8. The method as claimed in claim 3, wherein at least a portion of the thread is interwoven with the fibre material.

9. The method as claimed in claim any preceding claim, further comprising:
heating the resin to a first temperature, between 100 and 140 °C, which is higher than or equal to the infusion temperature but lower than a melting temperature of the carrier material.

10. The method as claimed in claim 9, further comprising:
after heating the resin to the first temperature, heating the resin to a second temperature, between 160 and 200 °C, which is higher than the melting temperature of the carrier material.

11. The method as claimed in any preceding claim, including increasing the pressure to between 0,55 and 0,69 MPa (80 and 100 psi).

## Patentansprüche

1. Verfahren zum Bilden eines Nanoverbundmaterials, das Nanopartikel (10) beinhaltet, wobei das Verfahren Folgendes umfasst:
Anordnen eines Fasermaterials (32), eines Trägermaterials (12), das darin dispergierte Nanopartikel umfasst, wobei das Trägermaterial einen Freisetzungsauslöser aufweist, um die Freisetzung der Nanopartikel auszulösen, wobei der Freisetzungsauslöser eine Freisetzungstemperatur und ein Freisetzungsdruck ist, und eines Harzes, das eine Infusionstemperatur aufweist, in einer Formvorrichtung (34);
Erhöhen der Temperatur innerhalb der Formvorrichtung auf eine Temperatur, die zumindest gleich der Infusionstemperatur des Harzes ist, um dem Harz zu ermöglichen, das Fasermaterial zu imprägnieren, ohne den Freisetzungsauslöser des Trägermaterials auszulösen;
Auslösen des Freisetzungsauslösers des Trägermaterials in der Formvorrichtung durch Erhöhen der Temperatur und des Drucks innerhalb der Formvorrichtung, um die Dispergierung der Nanopartikel in das Harz zu bewirken; und
Härten des Harzes mit den darin dispergierten Nanopartikeln.

2. Verfahren nach Anspruch 1, wobei:
die Nanopartikel zumindest eines von Kohlenstoffnanoröhrchen und Graphen umfassen, das Harz ein wärmehärtbares Polymer umfasst, und
das Trägermaterial ein thermoplastisches Material umfasst.

3. Verfahren nach Anspruch 1 oder 2, beinhaltend das Bilden eines Fadens (22) aus einer Mischung aus Trägermaterial und dispergierten Nanopartikeln.

4. Verfahren nach Anspruch 3, wobei der gebildete Faden gewebt ist, um einen Schleier (24) zu bilden.

5. Verfahren nach Anspruch 4, wobei das Fasermaterial als ein planares Material bereitgestellt ist und sich der Schleier an einer Außenfläche des planaren Fasermaterials befindet.

6. Verfahren nach Anspruch 4 oder 5, wobei eine Vielzahl von planaren Fasermaterialien in einer Laminatanordnung bereitgestellt ist und sich der Schleier zwischen zwei benachbarten Schichten des planaren Fasermaterials befindet.

7. Verfahren nach einem vorhergehenden Anspruch, wobei eine Mischung aus dem Trägermaterial und dispergierten Nanopartikeln nur in einer oder mehreren lokalen Regionen der zu bildenden Verbundstruktur bereitgestellt ist.

8. Verfahren nach Anspruch 3, wobei zumindest ein Teil des Fadens mit dem Fasermaterial verwoben ist.

9. Verfahren nach einem vorhergehenden Anspruch, ferner umfassend:
Erwärmen des Harzes auf eine erste Temperatur zwischen 100 und 140 °C, die höher als die oder gleich der Infusionstemperatur, aber niedriger als eine Schmelztemperatur des Trägermaterials ist.

10. Verfahren nach Anspruch 9, ferner umfassend:
Erwärmen des Harzes auf eine zweite Temperatur zwischen 160 und 200 °C, die höher als die Schmelztemperatur des Trägermaterials ist, nach dem Erwärmen des Harzes auf die erste Temperatur.

11. Verfahren nach einem vorhergehenden Anspruch, beinhaltend das Erhöhen des Drucks auf 0,55 bis 0,69 MPa (80 bis 100 psi).

## Revendications

1. Procédé de formation d'un matériau nanocomposite comprenant des nanoparticules (10), ledit procédé comprenant :
la disposition dans un appareil de formage (34) d'un matériau fibreux (32), d'une matrice (12) comprenant des nanoparticules dispersées à l'intérieur de celle-ci, ladite matrice possédant une caractéristique de déclenchement de libération pour déclencher la libération des nanoparticules, la caractéristique de déclenchement de libération étant une température de libération et une pression de libération, et une résine possédant une température d'infusion ;
l'augmentation de la température dans l'appareil de formage jusqu'à une température au moins égale à la température d'infusion de la résine pour permettre à la résine d'imprégner le matériau fibreux sans déclencher la caractéristique de déclenchement de libération de la matrice ; le déclenchement de la caractéristique de déclenchement de libération de la matrice dans l'appareil de formage en augmentant la température et la pression à l'intérieur de l'appareil de formage afin de provoquer la dispersion des nanoparticules dans la résine ; et le durcissement de la résine avec les nanoparticules dispersées dans celle-ci.

2. Procédé selon la revendication 1,
lesdites nanoparticules comprenant au moins l'un des nanotubes de carbone et du graphène, ladite résine comprenant un polymère thermodurcissable et ladite matrice comprenant un matériau thermoplastique.

3. Procédé selon la revendication 1 ou 2, comprenant la formation d'un fil (22) à partir d'un mélange de la matrice et de nanoparticules dispersées.

4. Procédé selon la revendication 3, ledit fil formé étant tissé pour former un voile (24).

5. Procédé selon la revendication 4, ledit matériau fibreux étant fourni sous la forme d'un matériau plat et ledit voile étant situé sur une surface externe du matériau fibreux plat.

6. Procédé selon la revendication 4 ou 5, une pluralité de matériaux fibreux plans étant disposés selon un agencement stratifié et ledit voile étant situé entre deux couches adjacentes du matériau fibreux plan.

7. Procédé selon l'une quelconque des revendications précédentes, un mélange de la matrice et des nanoparticules dispersées étant uniquement fournis dans une ou plusieurs zones locales de la structure composite à former.

8. Procédé selon la revendication 3, au moins une partie du fil étant entremêlée avec le matériau fibreux.

9. Procédé selon l'une quelconque des revendications précédentes, comprenant en outre :
le chauffage de la résine à une première température, comprise entre 100 et 140°C, supérieure ou égale à la température d'infusion mais inférieure à la température de fusion de la matrice.

10. Procédé selon la revendication 9, comprenant en outre :
après le chauffage de la résine à la première température, le chauffage de la résine à une seconde température, comprise entre 160 et 200°C, supérieure à la température de fusion de la matrice.

11. Procédé selon l'une quelconque des revendications précédentes, comprenant l'augmentation de la pression jusqu'à ce qu'elle soit comprise entre 0,55 et 0,69 MPa (80 et 100 psi).
